# EUROPÄISCHE PATENTSCHRIFT

(11) **EP 3 670 001 B1**
(45) Veröffentlichungstag und Bekanntmachung des Hinweises auf die Patenterteilung: **28.07.2021**
(21) Anmeldenummer: 18213643.2
(22) Anmeldetag: 18.12.2018
(51) Int. Cl.: B05B 13/04, B05B 13/06, B05B 15/652, B05B 15/68, B05B 12/12, B25J 11/00, B05B 7/06, B05B 3/02

(54) **VERFAHREN ZUR HOHLRAUMKONSERVIERUNG, MISCHDÜSENEINHEIT UND HOHLRAUMKONSERVIERUNGSEINRICHTUNG MIT EINER SOLCHEN MISCHDÜSENEINHEIT**
METHOD FOR CAVITY PRESERVATION, MIXING NOZZLE UNIT AND CAVITY PRESERVATION DEVICE WITH SUCH A MIXING NOZZLE UNIT
PROCÉDÉ DE CONSERVATION D'ESPACE CREUX, BUSE DE MÉLANGE ET DISPOSITIF DE CONSERVATION D'ESPACE CREUX DOTÉ D'UNE TELLE BUSE DE MÉLANGE

(43) Veröffentlichungstag der Anmeldung: 24.06.2020
(73) Patentinhaber: IPR-Intelligente Peripherien für Roboter GmbH, 75031 Eppingen (DE)
(72) Erfinder: Doll, Fredy, 77855 Achern (DE); Engelhart, Marc, 74889 Sinsheim (DE)
(74) Vertreter: Patentanwaltskanzlei Cartagena

(56) Entgegenhaltungen:
- FR-A3- 3 014 334
- JP-A- H06 206 025
- JP-B2- 3 699 770
- US-B1- 6 206 300
- US-B1- 6 632 475

## Beschreibung

### ANWENDUNGSGEBIET UND STAND DER TECHNIK

Die Erfindung betrifft den Bereich der Hohlraumkonservierung, insbesondere den Bereich der Hohlraumkonservierung im Kfz-Bereich. Die Erfindung betrifft dabei ein Verfahren zur Ausbringung von Hohlraumkonservierungsmittel sowie dafür geeignete und vorgesehene Vorrichtungen.

Solche Verfahren finden bei der Automobilherstellung seit Langem Verwendung. Um Hohlräume der Fahrzeugkarosserie gegen Umwelteinflüsse zu schützen und an Wandungen dieser Hohlräume beginnende Korrosionen zu verhindern, werden die Innenoberflächen solcher Hohlräume mit einem Hohlraumkonservierungsmittel überzogen. Die verfestigte Schicht erschwert Korrosion. Die fraglichen Hohlräume, bei denen diese Verfahren angewendet werden, sind insbesondere die Schweller, Hohlräume an den Radläufen sowie Längs- und Querträger des Fahrzeugs.

Aus der WO 2017/13620 A1 ist es bereits bekannt, Hohlraumkonservierungsmittel in Form eines Schutzmittelnebels auszutragen, also mit Tröpfchengrößen von < 30 µm oder gar < 10 µm. Ein solcher Schutzmittelnebel schlägt sich nicht unmittelbar vollständig auf den zu beschichtenden Oberflächen nieder, sondern bildet zumindest zum Teil zunächst eine weitgehend ruhende Nebelwolke, die sich erst nach einiger Zeit zum überwiegenden Teil niedergeschlagen hat.

Die Erfindung betrifft insbesondere den Bereich der Hohlraumkonservierung mittels eines solchen Schutzmittelnebels.

Aus der DE 10 2010 034 921 A1 ist es für den Bereich des unzerstäubten Austrags von Wachs oder eines Konservierungsmittels bekannt, eine Lanze zu verwenden, die über ein drehbares äußeres Düsenrohr verfügt. Weitere drehbare Düsen aus dem Kfz-Bereich sind aus den Dokumenten FR 3014334 A1 und der EP 2 228 136 A2 bekannt.

Aus der US 6,632,475 B1 und der JP H06-206025 A sind Rotationsdüsen aus anderen Bereichen als dem Kfz-Bereich bekannt.

### AUFGABE UND LÖSUNG

Aufgabe der Erfindung ist es, ein Verfahren zur Verfügung zu stellen, um Hohlraumkonservierungsmittel bei zerstäubter oder gar vernebelter Form derart auszubringen, dass sich eine hochqualitative Schicht mit gut beeinflussbarer Schichtdicke bildet.

Vorgeschlagen wird hierfür ein Verfahren zur Hohlraumkonservierung, welches die Aufbringung einer Schutzschicht aus einem Hohlraumkonservierungsmittel auf der Innenseite eines Hohlkörpers, insbesondere auf der Innenseite eines Kfz-Teils, ermöglicht. Dieses Verfahren findet unter Verwendung einer Hohlraumkonservierungseinrichtung mit einer Mischdüseneinheit statt, so dass diese Aspekte der Erfindung im Weiteren gemeinsam mit dem Verfahren erläutert sind.

Das Verfahren erfolgt unter Nutzung einer Mischdüseneinheit, die mit einem proximalen Ende an einer Rotoreinheit angekoppelt ist, mittels derer sie um eine Drehachse drehbar ist, wobei die Mischdüseneinheit an einem distalen Ende über eine radial zur Drehachse ausgerichtete Mischdüse verfügt. Die drehbare Mischdüseneinheit verfügt dabei über zwei getrennte und in Richtung der Drehachse erstreckte Zuführkanäle für das Hohlraumkonservierungsmittel einerseits sowie für Gas zum Zwecke der Zerstäubung des Hohlraumkonservierungsmittels andererseits. Durch die Zuführkanäle können das Hohlraumkonservierungsmittel und das Zerstäubungsgas getrennt bis zur Mischdüse geleitet werden.

Im Rahmen des Verfahrens wird die Mischdüseneinheit in Richtung der Drehachse durch eine Öffnung des Hohlkörpers in diesen eingefahren, so dass sich zumindest die Mischdüse und eine oder mehrere an ihr vorgesehene Austragöffnungen innerhalb des Hohlkörpers befinden.

Mittels der Mischdüse wird das Hohlraumkonservierungsmittel dann in zerstäubter Form ausgetragen und schlägt sich auf der Innenseite des Hohlkörpers nieder, wobei während des Austrags oder zwischen mehreren Austragsphasen die Mischdüseneinheit um die Drehachse gegenüber dem Hohlkörper gedreht wird.

Die genannte Mischdüse ist dabei für die Zerstäubung der getrennt zugeführten Fluide, also des flüssigen Hohlraumkonservierungsmittels und des gasförmigen Zerstäubungsmediums verantwortlich. Das gasförmige Medium ist vorzugsweise Luft. Soweit im Weiteren die Zerstäubung oder Vernebelung mit Luft genannt ist, umfasst dies auch die Verwendung anderer Gase. Das flüssige Hohlraumkonservierungsmittel und/oder das Gas werden der Mischdüse unter Überdruck zugeführt. Dabei können exemplarisch Drücke von 2 bar bis 10 bar für das Hohlraumkonservierungsmittel und auch 2 bar bis 10 bar für das Zerstäubungsgas genutzt werden.

Die Mischdüse kann eine interne Zerstäubungskammer aufweisen, aus der das mittels des Gases zerstäubte oder vernebelte Hohlraumkonservierungsmittel durch eine Austragöffnung ausgetragen wird. Besonders bevorzugt ist allerdings eine Gestaltung, bei der die Mischdüse für eine externe Vermengung von Luft und Hohlraumkonservierungsmittel und damit eine externe Zerstäubung oder Vernebelung vorgesehen ist. Sie weist in diesem Falle mindestens zwei Auslassöffnungen auf, die derart ausgerichtet sind, dass das austretende Hohlraumkonservierungsmittel bei gleichzeitig austretendem Gas stromabwärts der zwei Auslassöffnungen zerstäubt bzw. vernebelt wird.

Erfindungsgemäß wird die Mischdüse während des Austrags um die Drehachse gedreht, so dass sie ausgehend von einer Öffnung, durch die hindurch sie in den Hohlraum eingeführt ist, in unterschiedliche Richtungen Hohlraumkonservierungsmittel abgeben kann. Sie dreht sich während eines Beschichtungsvorgangs vorzugsweise mindestens um 360°, insbesondere vorzugsweise mehrfach. Wie im Weiteren noch erläutert ist, ist es daher von Vorteil, wenn die Fluidzuführung baulich ein endloses Drehen gestattet.

Das Drehen der Mischdüse ist insbesondere von Vorteil, da sich gerade bei der Zerstäubung des Hohlraumkonservierungsmittels in Nebelform, also mit mittleren Tröpfchengrößen < 60 µm, vorzugsweise < 30 µm, insbesondere vorzugsweise < 10 µm, gezeigt hat, dass das Beschichtungsergebnis auch davon beeinflusst ist, wie groß der Schutzmittelnebelstrom ist, der in Richtung einer zu beschichtenden Fläche abgegeben wird. Die zyklische wiederholte Ausbringung eines vergleichsweise geringen Schutzmittelnebelstroms, die durch das mehrfache Drehen bei gleichzeitigem Austrag möglich wird, führt zu einer besseren Schutzschicht als die einmalige Ausbringung eines größeren Schutzmittelnebelstroms. Durch das wiederholte Drehen der Mischdüse lagert sich das Hohlraumkonservierungsmittel in homogenerer und reproduzierbarerer Weise ab. Vorzugsweise wird eine Drehgeschwindigkeit zwischen 1 und 10 Umdrehungen/Minute verwendet.

Auch wenn bei einem erfindungsgemäßen Verfahren ausschließlich die zerstäubte oder gar vernebelte Ausbringung des Hohlraumkonservierungsmittels vorgesehen ist, ist die Mischdüse vorzugsweise auch für die Abgabe eines unzerstäubten Strahls von Hohlraumkonservierungsmittel geeignet. Sie kann daher beispielsweise auch der gezielten Beschichtung von Schweißnähten im Hohlraum dienen.

Auch in Hinblick auf die unzerstäubte Ausbringung ist die oben bereits genannte externe Zerstäubung durch die Mischdüse von Vorteil, da hier durch eine Unterbrechung der Gaszufuhr der gewünschte Strahl erzeugbar ist.

Erfindungsgemäß ist vorgesehen, dass das Verfahren nicht mit konstantem und ununterbrochenem Hohlraumkonservierungsmittelstrom bei gleichbleibender Drehgeschwindigkeit der Mischdüse durchgeführt wird, sondern ein Austrag vorgesehen ist, der in Abhängigkeit der Winkelstellung variiert, so dass nicht in alle Richtungen die gleiche Menge des Hohlraumkonservierungsmittelstrom abgegeben werden.

Es hat sich gezeigt, dass dies auch insbesondere bei der Erzeugung eines Schutzmittelnebels von Vorteil ist. Zwar bildet dieser zunächst eine Wolke aus Tröpfchen, die sich erst nach und nach niederschlagen und dadurch ohnehin zur Homogenisierung neigen. Es hat sich jedoch gezeigt, dass eine solche Nebelwolke dennoch lokal zu unterschiedlichen Schichtdicken führt. Durch einen variierenden Austrag in Abhängigkeit der Winkelstellung kann dem gezielt entgegengewirkt werden oder dies gegebenenfalls sogar gezielt eingesetzt werden, um lokal größere Schichtdicken zu erzeugen.

Verschiedene Arten der richtungsabhängigen Variation sowie Kombinationen hieraus sind möglich.

Bei einer Variante ist vorgesehen, dass während des Drehens der Mischdüseneinheit die Zufuhr von Hohlraumkonservierungsmittel zur Mischdüse variiert. Dies führt bei einer Drehbewegung der Mischdüseneinheit mit konstanter Drehgeschwindigkeit zum genannten variierenden Austrag je überstrichenem Winkelbereich. Die Variation des zugeführten Hohlraumkonservierungsmittels kann insbesondere über ein elektrisch gesteuertes Dosierventil erfolgen.

Eine besonders einfache Art der Variation liegt vor, wenn ein Ventil vorgesehen ist, welches während der Durchführung des Verfahrens lediglich die Zufuhr von Hohlraumkonservierungsmittel phasenweise aktiviert und phasenweise deaktiviert. Hierfür ist ein einfaches Ventil, insbesondere ein pneumatisch gesteuertes Ventil, ausreichend. Die Deaktivierung des Austrags während der Drehbewegung der Mischdüse kann insbesondere zweckmäßig sein, wenn in einem Winkelbereich keinerlei Austrag erfolgen soll, beispielsweise da dort Öffnungen vorgesehen sind, durch die der Schutzmittelnebel oder - sprühstrahl anderenfalls ungewollt austreten würde.

Besonders vorteilhaft ist es, wenn der winkelabhängige Hohlraumkonservierungsmittelstrom dadurch erzielt wird, dass die Drehgeschwindigkeit variiert wird. In unterschiedlichen Winkelbereichen führt ein konstanter Hohlraumkonservierungsmittelstrom dann zu einer variierenden Menge Hohlraumkonservierungsmittel je Winkelbereich. Ein solches Verfahren ist mit einem einfach schaltenden Ventil oder ggf. sogar ohne Ventil im Zuführkanal des Hohlraumkonservierungsmittels möglich, alleine durch die Ansteuerung des vorzugsweise elektrischen Motors, mittels dessen die Mischdüse gedreht wird.

Die Mischdüseneinheit, die für das beschriebene Verfahren vorzugsweise verwendet wird, verfügt über einen länglichen Schaft, an dessen proximalen Ende eine Kopplungseinrichtung zur Anbringung an einer Rotoreinheit vorgesehen ist und der sich entlang einer durch die Kopplungseinrichtung definierten Drehachse erstreckt. Diese Mischdüseneinheit verfügt im Bereich eines distalen Endes über die Mischdüse, die quer zur Drehachse ausgerichtet ist, so dass das zerstäubte Hohlraumkonservierungsmittel bezogen auf die Drehrichtung in radialer Austragrichtung mittels der Mischdüse abgegeben werden kann.

Dabei verfügt die Mischdüseneinheit über zwei getrennte und in Richtung der Drehachse erstreckte Zuführkanäle für das Hohlraumkonservierungsmittel sowie für Gas zum Zwecke der Zerstäubung, durch die das Hohlraumkonservierungsmittel und das Zerstäubungsgas getrennt bis zur Mischdüse geleitet werden. Hierdurch wird der Bedarf einer frühen Zerstäubung im nicht drehbaren Teil der Hohlraumkonservierungseinrichtung vermieden. Dies ist erheblich, da insbesondere bei einer sehr feinen Zerstäubung bzw. einer Vernebelung die Zuführung des zerstäubten oder vernebelten Hohlraumkonservierungsmittels bis zu einer Austragöffnung die Gefahr von Funktionsstörungen mit sich bringt, wenn sich das zerstäubte Hohlraumkonservierungsmittel auf Wandungen der Zuführkanäle niederschlägt.

Es ist daher bei einer verwendeten Mischdüseneinheit vorgesehen, dass die getrennten Zuführkanäle Umlenkungsabschnitte aufweisen, in denen das zugeführte Hohlraumkonservierungsmittel und das zugeführte Gas von einer axialen Strömungsrichtung zum Zwecke der nachfolgenden Zerstäubung getrennt voneinander in eine radiale Strömungsrichtung umgelenkt werden. Erst jenseits dieser Umlenkung erfolgen die Vermengung und dadurch die Zerstäubung des Hohlraumkonservierungsmittels. Wie oben schon genannt, kann dies in einer internen Misch- und Zerstäubungskammer oder extern geschehen.

Die beiden Zuführkanäle münden hierfür insbesondere vorzugsweise in den genannten vorzugsweise mindestens zwei Auslassöffnungen, von denen eine mit dem Zuführkanal für Gas verbunden ist und von denen die andere mit dem Zuführkanal für Hohlraumkonservierungsmittel verbunden ist. Insbesondere vorzugsweise ist die Auslassöffnung für das Hohlraumkonservierungsmittel zentrisch angeordnet und wird von der Gas-Auslassöffnung oder den Gas-Auslassöffnungen umgeben. Insbesondere kann es sich um eine Gas-Auslassöffnung handeln, die ringförmig die Auslassöffnung für das Hohlraumkonservierungsmittel umgibt.

Die Mischdüseneinheit ist insbesondere vorzugsweise modular ausgebildet, so dass sie mindestens zwei voneinander einfach trennbare Teile aufweist, von denen das eine die Kopplungseinrichtung zur Befestigung an der Rotoreinheit sowie vorzugsweise den überwiegenden Teil des Schaftes bildet, während das andere Teil mindestens die Mischdüse umfasst. Eine solche Bauweise gestattet es, die vergleichsweise aufwändige und teure Mischdüse in unterschiedlichen Konfigurationen und insbesondere mit Schäften unterschiedlicher Länge und damit unterschiedlicher maximaler Eintauchtiefe zu verwenden.

Um die Handhabung einer Mischdüseneinheit zu erleichtern, weist diese vorzugsweise am proximalen Ende eine Ausrichtungsmarkierung auf, so dass auch bei partiell in die Öffnung des Hohlkörpers eingefahrener Mischdüseneinheit die Ausrichtung der Mischdüse von außen erkennbar ist. Ebenfalls zum Zwecke der erleichterten Handhabung ist es von Vorteil, wenn die Mischdüseneinheit entlang ihres länglichen Schaftes eine Skala oder Markierungen aufweist, so dass eine Eintauchtiefe der Mischdüseneinheit in den Hohlkörper von außen erkennbar ist.

Eine Hohlraumkonservierungseinrichtung zur Aufbringung einer Schutzschicht aus einem Hohlraumkonservierungsmittel auf der Innenseite eines Hohlkörpers verfügt über eine Ausbringungseinrichtung mit einer um eine Drehachse drehbaren Rotoreinheit. Diese Rotoreinheit weist eine Kopplungseinrichtung zur Ankoppelung einer Mischdüseneinheit der beschriebenen Art auf.

Die genannte Ausbringungseinrichtung, an der die Mischdüseneinheit drehbar befestigt ist, umfasst Kanäle zur Zuführung von Gas und Hohlraumkonservierungsmittel. Sie umfasst vorzugsweise weiterhin einen Motor zum Antrieb der Rotoreinheit, an der die Mischdüseneinheit wechselbar befestigt ist.

Die Ausbringungseinrichtung ist vorzugsweise dafür vorgesehen, am Roboterarm eines Roboters befestigt zu werden und weist zu diesem Zweck eine hierfür vorgesehen Kopplungseinrichtung auf. Diese ist vorzugsweise derart gestaltet, dass auch die Zufuhrkanäle für Gas und/oder für Hohlraumkonservierungsmittel und/oder Steuerleitungen zur pneumatischen oder elektrischen Versorgung eines Auslassventils oder eines Elektromotors zum Antrieb der Rotoreinheit durch Ankopplung der Ausbringungseinheit verbunden werden.

Die Ausbringungseinrichtung umfasst demzufolge vorzugsweise mindestens ein Ventil, welches zur Steuerung insbesondere der Zufuhr von Hohlraumkonservierungsmittel zum Mischdüseneinheit dient. Wie bereits erläutert, kann es sich um ein Ventil handeln, welches lediglich das Öffnen und Schließen des Zuführkanals gestattet, oder um ein Dosierventil, welches entweder mehrere diskrete Öffnungszustände oder als Stetigventil beliebige Öffnungszustände gestattet.

Die Ausbringungseinrichtung umfasst weiterhin vorzugsweise den genannten Motor, insbesondere in Form eines Elektromotors. Sofern dieser in oben genannter Weise mit variabler Geschwindigkeit betrieben werden soll, so erfolgt eine dahingehende Steuerung vorzugsweise durch eine zentrale Steuerung des Roboters, an dessen Arm die Ausbringungseinrichtung angebracht ist.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 bis 3 zeigen eine Ausbringungseinrichtung mit Mischdüseneinheit in verschiedenen Perspektiven.
Fig. 4 und 5 zeigen die Ausbringungseinrichtung der vorstehenden Figuren in teilgeschnittener bzw. geschnittener Darstellung.
Fig. 6 bis 8 zeigen weitere Schnitte, aus denen die Fluidzuführung zur Mischdüseneinheit zu ersehen ist.
Fig. 9 zeigt eine Hohlraumkonservierungseinrichtung mit einem Roboter zur Handhabung der Ausbringungseinrichtung.
Fig. 10 verdeutlicht die Funktionsweise der Ausbringungseinrichtung im Betrieb.
Fig. 11 bis 13 zeigen einen drehwinkelabhängigvariablen Austrag von Hohlraumkonservierungsmittel.

### DETAILLIERTE BESCHREIBUNG DERAUSFÜHRUNGSBEISPIELE

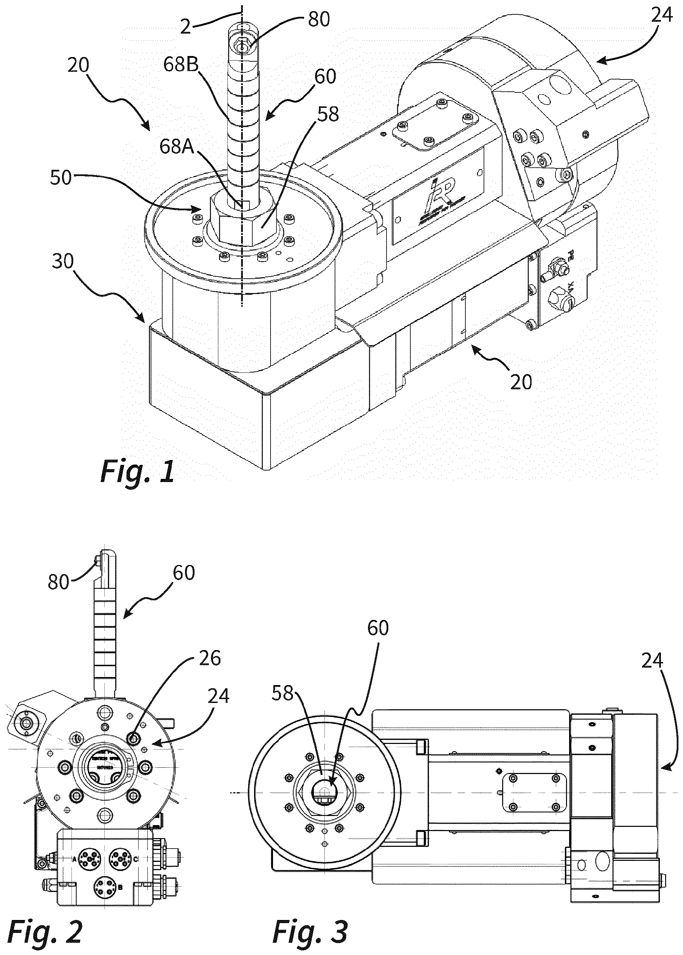

Fig. 1 zeigt eine Ausbringungseinrichtung 20, die die Kernkomponente einer Hohlraumkonservierungseinrichtung 10 darstellt. Diese Ausbringungseinrichtung 20 ist beim vorliegenden Ausführungsbeispiel zurAnkoppelung an einen Roboterarm 14 vorgesehen und weist zu diesem Zweck eine Kopplungseinrichtung 24 auf, die in im Weiteren noch erläuterter Weise auch Versorgungs- und Steuerleitungen umfasst.

Die Ausbringungseinrichtung 20 verfügt über eine Drehantriebseinheit 30 mit einem in Fig. 1 nicht dargestellten internen Elektromotor, der dafür vorgesehen ist, eine drehbare Rotoreinheit 50 um eine Drehachse 2 drehen zu können. Dabei kann der Elektromotor 32 die Rotoreinheit 50 nicht nur begrenzt zwischen zwei Endlagen drehen, sondern frei um 360° und endlos weiter.

Zum Zwecke der Ausbringung von Hohlraumkonservierungsmittel verfügt die Ausbringungseinrichtung 20 über eine Mischdüseneinheit 60, die mittels einer Mutter 58 drehfest an der Rotoreinheit 50 angebracht ist. Die Mischdüseneinheit 60 weist einen länglichen Schaft 66 auf, dessen proximales Ende 60A durch die Mutter 58 festgelegt ist. Am distalen Ende 60B der Mischdüseneinheit 60 ist eine Mischdüse 80 vorgesehen, die in radialer Richtung ausgerichtet ist, so dass hier ausgetragenes Fluid in einer Austragsrichtung ausgetragen wird, die zur Drehachse 2 etwa einen Winkel von 90° einschließt. Je nach Anwendungszweck können auch geringere Winkel vorgesehen sein, beispielsweise 60° und mehr.

Bezugnehmend auf Fig. 2 ist die Kopplungseinrichtung 24 gut zu erkennen. Sie ist in der schon genannten Weise mit Anschlüssen 26 versehen, durch die Hohlraumkonservierungsmittel, Druckluft, elektrische Energie und Steuersignale übertragen werden.

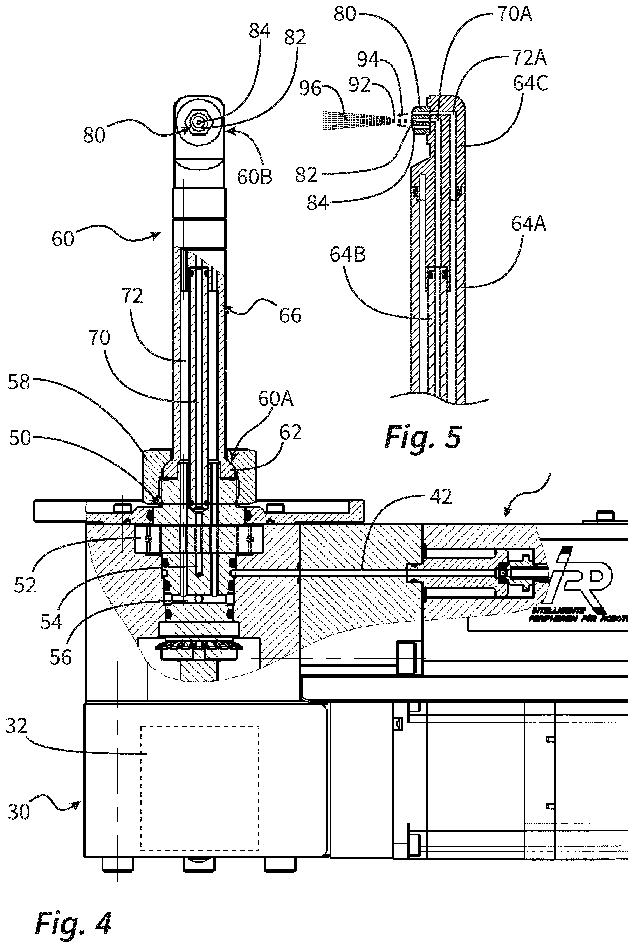

Die Fig. 4 und 5 zeigen die Ausbringungseinrichtung 20 und die Mischdüseneinheit 60 in vergrößerter und geschnittener Darstellung. Die Ausbringungseinrichtung 20 verfügt im Bereich der Mischdüseneinheit 60 über die Drehantriebseinheit 30, die einen nur schematisch in Fig. 4 dargestellten Elektromotor 32 umfasst. Dieser ist zum Antrieb des Rotors 50 vorgesehen, der an seinem oberen Ende über ein Gewinde verfügt, mittels dessen die Mutter 58 an Rotor 50 festgeschraubt ist. Wie in der Fig. 4 zu ersehen ist, verfügt die Mutter 58 über eine konische Innenseite korrespondierend zu einer ebenfalls konischen Kopplungseinrichtung 62 auf Seiten der Mischdüseneinheit 60. Die Rotoreinheit 50 ist mittels eines Wälzlagers 52 drehbar an einer Basis der Ausbringungseinrichtung 20 gelagert.

Die Mischdüseneinheit 60 besteht neben der Mischdüse 80 selbst aus drei Hauptbestandteilen, nämlich einem Außenrohr 64A, einem Innenrohr 64B und einer Düsenaufnahme 64C, in der die Mischdüse 80 befestigt ist. Diese Bauweise gestattet ein einfaches Umkonfigurieren der Mischdüseneinheit, indem die Bauteile 64A, 64B gegen Bauteile anderer Länge ausgetauscht werden. Hierdurch lassen sich Mischdüseneinheiten mit verschiedener maximaler Eintauchtiefe nutzen. Innerhalb des Innenrohrs 64B und fortgesetzt bis in das Bauteil 64C erstreckt sich ein Zuführkanal 70 zur Zuführung des Hohlraumkonservierungsmittels. An seinem distalen Ende weist dieser Zuführkanal 70 eine Umlenkung 70A auf, an der zuströmendes Hohlraumkonservierungsmittel aus einer axialen Strömungsrichtung in eine radiale Strömungsrichtung umgelenkt wird. In ähnlicher Weise ist auch ein Zuführkanal 72 zwischen der Außenseite des Innenrohrs 64B und der Innenseite des Außenrohrs 64A geschaffen, der sich ebenfalls bis ins Bauteil 64C fortsetzt und dort in einem Umlenkungsbereich 72A in radiale Richtung umgelenkt wird. Beide Fluide, das Hohlraumkonservierungsmittel sowie zur Zerstäubung verwendetes Gas, gelangen also bereits in radiale Richtung umgelenkt zur Mischdüse 80, wo sie im Falle der dargestellten Ausgestaltung der Mischdüse 80 zu getrennten Auslassöffnungen 82, 84 geleitet werden, an denen sie unter Druck abgegeben werden. Wie durch die Pfeile 94 verdeutlicht ist, wird das ausgetretene Hohlraumkonservierungsmittel 92 dabei zerstäubt und bildet einen feinen Schutzmittelnebel 96.

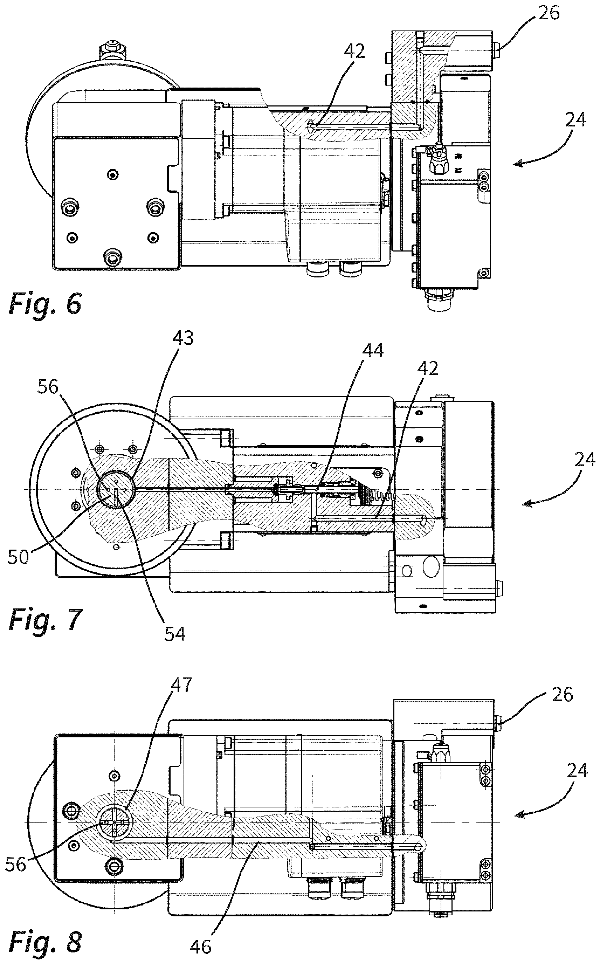

Die Versorgung der genannten Zuführkanäle 70, 72 erfolgt durch die Rotoreinheit 50, die zu diesem Zweck in der auch den folgenden Fig. 6 bis 8 erkennbaren Weise einen zentrischen Hohlraumkonservierungsmittelkanal 54 und hierzu umgebend Gaskanäle 56 aufweist. Wie anhand der Fig. 4, insbesondere aber auch der Fig. 7 und 8 zu ersehen ist, sind jeweils Drehdurchführungen 43, 47 vorgesehen, mittels derer die Kanäle 54, 56 dauerhaft mit korrespondierenden Kanälen 42, 46 der Basis verbunden sind. Diese Kanäle 42, 46 werden von den genannten Anschlüssen 26 an der Kopplungseinrichtung 24 versorgt, wobei im Kanal 42 für das Hohlraumkonservierungsmittel ein Schaltventil 44 vorgesehen ist, mittels dessen die Zuführung von Hohlraumkonservierungsmittel vergleichsweise nah an der Austragöffnung 84 unterbrochen werden kann. Das Ventil 44 ist dabei als pneumatisch schaltbares Ventil vorgesehen.

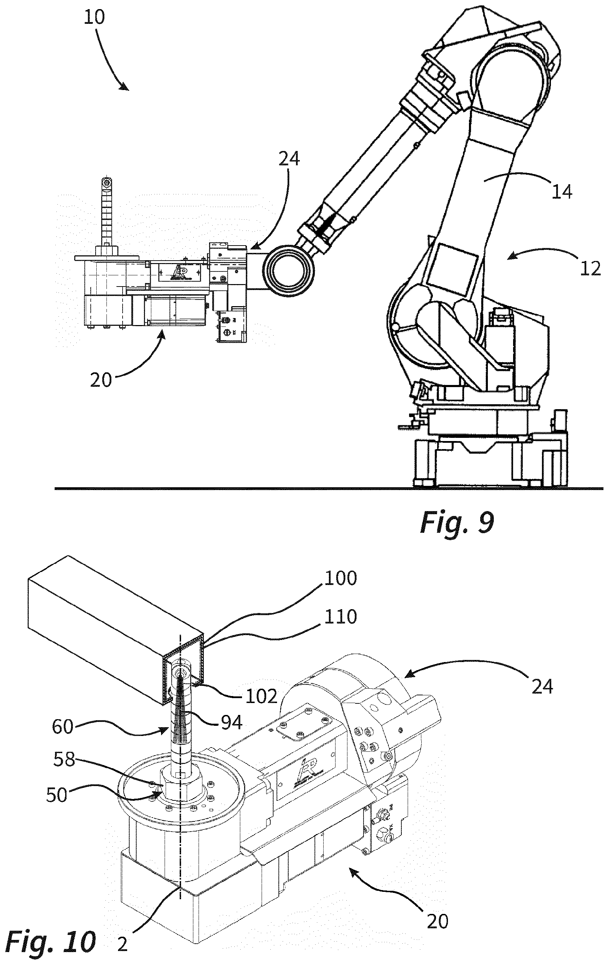

Fig. 9 zeigt die bestimmungsgemäße Hauptverwendung einer Ausbringungseinrichtung entsprechend der vorangestellten Figuren. Es ist zu ersehen, dass die Ausbringungseinrichtung 20 mit ihrer Kopplungseinrichtung 24 an einem Roboterarm 14 angebracht ist, mittels dessen die Ausbringungseinrichtung in flexiblem Raum beweglich ist, um insbesondere gegenüber einem Fahrzeugchassis bewegt zu werden und in eine Arbeitsposition gebracht zu werden. Fig. 10 zeigt eine solche Arbeitsposition. In der Arbeitsposition ist die Mischdüseneinheit 60 partiell durch eine Öffnung 102 in einen Hohlkörper 100 eingefahren. Hier wird bestimmungsgemäß bei gleichzeitiger Erzeugung eines Schutzmittelnebels die Mischdüseneinheit 60 mittels der Rotoreinheit 50 und dem Elektromotor 32 gedreht. Der erzeugte Sprühnebel 94 kann daher in verschiedene Richtungen und auf alle inneren Oberflächen des Hohlkörpers 100 aufgebracht werden.

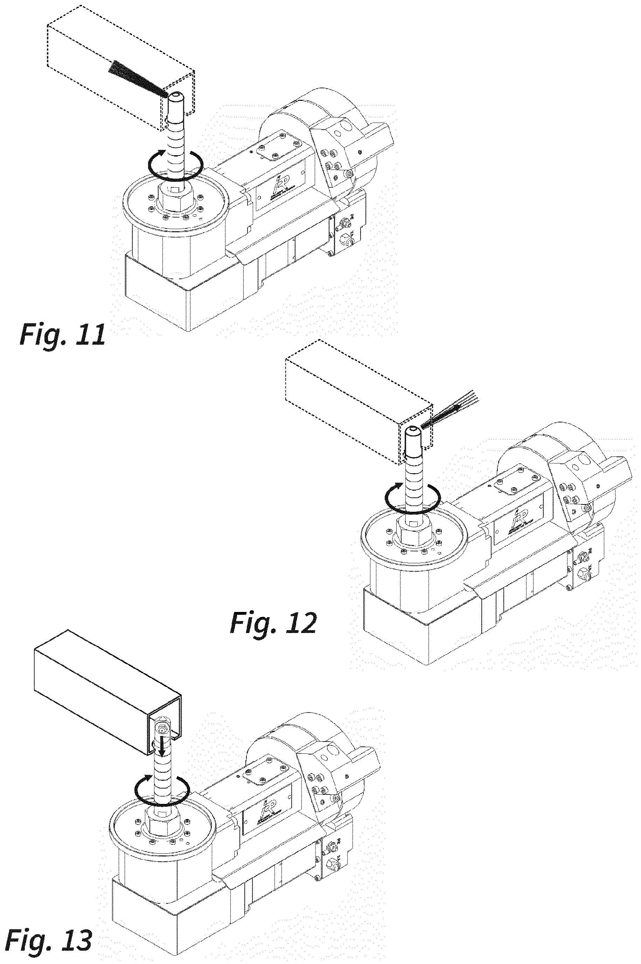

Die Fig. 11 bis 13 verdeutlichen das weiter. Fig. 11 zeigt dabei eine Ausrichtung der Mischdüse in Erstreckungsrichtung des länglichen Hohlkörpers 100. In diese Richtung ist eine besonders große Menge Schutzmittelnebels erforderlich, da die in dieser Richtung angeordneten Innenflächen vergleichsweise groß sind. Fig. 12 zeigt eine Ausrichtung im 90° Winkel zu jener der Fig. 11. In dieser Ausrichtung ist die Mischdüse auf eine vergleichsweise nahe Wandung gerichtet, so dass die in diesem Winkelbereich zu beschichtenden Flächen kleiner sind. Es ist daher auch eine geringere Menge Hohlraumkonservierungsmittel je Winkeleinheit erforderlich. Fig. 13 zeigt eine Ausrichtung, in der keinerlei Austrag von Hohlraumkonservierungsmittel gewollt ist.

Um dieses Ergebnis zu erzielen sind mehrere Möglichkeiten gegeben. So kann bei einer Variante des Verfahrens das Ventil 44 über den überwiegenden Teil einer 360°-Drehung der Mischdüseneinheit 60 geöffnet bleiben und nur in der Ausrichtung der Fig. 13 geschlossen werden. Um zusätzlich die unterschiedliche Hohlraumkonservierungsmittelmenge winkelabhängig entsprechend der Fig. 11 und 12 abgeben zu können, kann vorgesehen sein, dass bei konstanter Drehgeschwindigkeit der Mischdüseneinheit 60 das Ventil 44 oder ein anderweitiges elektrisch betriebenes Ventil den Strom des Hohlraumkonservierungsmittels in der Winkelstellung der Fig. 12 gegenüber der Stellung der Fig. 11 verringert. Alternativ kann die Drehgeschwindigkeit der Mischdüseneinheit in der Winkelstellung der Fig. 12 erheblich größer ist als in der Winkelstellung der Fig. 11 sein. Obwohl bei einem solchen Vorgehen die Mischdüse je Zeiteinheit die gleiche Menge Hohlraumkonservierungsmittel in den Drehstellungen der Fig. 11 und 12 abgibt, wird durch diese variable Geschwindigkeit die Menge des Hohlraumkonservierungsmittels je Winkeleinheit beeinflusst.

## Patentansprüche

1. Verfahren zur Hohlraumkonservierung mit den folgenden Merkmalen:
a. das Verfahren dient der Aufbringung einer Schutzschicht (110) aus einem Hohlraumkonservierungsmittel auf der Innenseite eines Hohlkörpers (100), insbesondere auf der Innenseite eines Kfz-Teils, und
b. zum Zwecke der Aufbringung wird eine Mischdüseneinheit (60) verwendet, die mit einem proximalen Ende (60A) an einer Rotoreinheit (50) angekoppelt ist, mittels derer sie um eine Drehachse (2) drehbar ist, wobei die Mischdüseneinheit (60) an einem distalen Ende (60B) über eine radial zur Drehachse (2) ausgerichtete Mischdüse (80) verfügt, und
c. die Mischdüseneinheit (60) verfügt über zwei getrennte und in Richtung der Drehachse (2) erstreckte Zuführkanäle (70, 72) für das Hohlraumkonservierungsmittel sowie für Gas zum Zwecke der Zerstäubung des Hohlraumkonservierungsmittels, wobei durch die Zuführkanäle (70, 72) das Hohlraumkonservierungsmittel und das Zerstäubungsgas getrennt bis zum Mischdüse (80) geleitet werden, und
d. die Mischdüseneinheit (60) wird in Richtung der Drehachse (2) durch eine Öffnung (102) des Hohlkörpers (100) in den Hohlkörper (100) eingefahren, so dass sich zumindest die Mischdüse (80) innerhalb des Hohlkörpers (200) befindet, und
e. mittels der Mischdüse (80) wird das Hohlraumkonservierungsmittel in zerstäubter Form ausgetragen und schlägt sich auf der Innenseite des Hohlkörpers (100) nieder, wobei während des Austrags oder zwischen mehreren Austragsphasen die Mischdüseneinheit (60) um die Drehachse (2) gegenüber dem Hohlkörper (100) gedreht wird,
**gekennzeichnet durch** mindestens eines der folgenden weiteren Merkmale:
f. während die Mischdüseneinheit (60) gedreht wird, wird die Zufuhr von Hohlraumkonservierungsmittel zur Mischdüse (80) variiert, so dass die in einem Winkelbereich konstanter Größe ausgetragene Menge von Hohlraumkonservierungsmittel in Abhängigkeit der Drehstellung uneinheitlich ist und/oder
g. während die Mischdüseneinheit (60) gedreht wird, wird die Zufuhr von Hohlraumkonservierungsmittel phasenweise unterbrochen, so dass in einem Teilbereich des Umfangs kein Hohlraumkonservierungsmittel ausgetragen wird, und/oder
h. die Mischdüseneinheit (60) wird mit variierender Drehgeschwindigkeit gedreht, so dass die in einem Winkelbereich konstanter Größe ausgetragene Menge von Hohlraumkonservierungsmittel in Abhängigkeit der Drehstellung variiert.

2. Verfahren zur Hohlraumkonservierung nach Anspruch 1 mit dem folgenden zusätzlichen Merkmal:
a. durch die Zufuhr von Gas wird eine Zerstäubung bewirkt, die zu einer Verneblung des Hohlraumkonservierungsmittels führt.

## Claims

1. Method for preserving cavities, having the following features:
a. the method serves for the application of a protective layer (110) composed of a cavity-preserving agent to the inner side of a hollow body (100), in particular to the inner side of a motor vehicle part, and,
b. for the purpose of the application, use is made of a mixing nozzle unit (60) which is coupled by way of a proximal end (60A) to a rotor unit (50), by means of which said mixing nozzle unit can be rotated about an axis of rotation (2), wherein, at a distal end (60B), the mixing nozzle unit (60) has a mixing nozzle (80) which is oriented radially with respect to the axis of rotation (2), and
c. the mixing nozzle unit (60) has two separate feed channels (70, 72), extending in the direction of the axis of rotation (2), for the cavity-preserving agent and for gas for the purpose of the atomization of the cavity-preserving agent, wherein the cavity-preserving agent and the atomization gas are conducted separately through the feed channels (70, 72) as far as the mixing nozzle (80), and
d. the mixing nozzle unit (60) is moved into the hollow body (100) through an opening (102) of the hollow body (100) in the direction of the axis of rotation (2) such that at least the mixing nozzle (80) is situated within the hollow body (100), and
e. the cavity-preserving agent is discharged in atomized form by means of the mixing nozzle (80) and is deposited on the inner side of the hollow body (100), wherein, during the discharge or between multiple discharge phases, the mixing nozzle unit (60) is rotated about the axis of rotation (2) in relation to the hollow body (100) ,
**characterized by** at least one of the following further features:
f. while the mixing nozzle unit (60) is being rotated, the feeding of cavity-preserving agent to the mixing nozzle (80) is varied, with the result that the quantity of cavity-preserving agent that is discharged over an angular range of constant size is non-uniform in a manner dependent on the rotational position, and/or,
g. while the mixing nozzle unit (60) is being rotated, the feeding of cavity-preserving agent is interrupted in phases such that no cavity-preserving agent is discharged in a sub-region of the circumference, and/or
h. the mixing nozzle unit (60) is rotated at a varying rotational speed, with the result that the quantity of cavity-preserving agent that is discharged over an angular range of constant size varies in a manner dependent on the rotational position.

2. Method for preserving cavities according to Claim 1, having the following additional feature:
a. the feeding of gas brings about atomization, which results in nebulization of the cavity-preserving agent.

## Revendications

1. Procédé de conservation d'espace creux présentant les caractéristiques suivantes :
a. le procédé est utilisé pour appliquer une couche de protection (110) comprenant un agent de conservation d'espace creux sur le côté intérieur d'un corps creux (100), en particulier sur le côté intérieur d'une pièce de véhicule automobile, et
b. pour effectuer l'application, une unité formant buse de mélange (60) est utilisée qui est accouplée par une extrémité proximale (60A) à une unité formant rotor (50) au moyen de laquelle elle peut être mise en rotation sur un axe de rotation (2), l'unité formant buse de mélange (60) disposant, à une extrémité distale (60B), d'une buse de mélange (80) orientée radialement par rapport à l'axe de rotation (2), et
c. l'unité formant buse de mélange (60) dispose de deux canaux d'alimentation séparés (70, 72) qui s'étendent dans la direction de l'axe de rotation (2) et qui sont destinés à l'agent de conservation d'espace creux et au gaz dans le but d'atomiser l'agent de conservation d'espace creux, l'agent de conservation d'espace creux et le gaz d'atomisation étant acheminés séparément à travers les canaux d'alimentation (70, 72) vers la buse de mélange (80), et
d. l'unité formant buse de mélange (60) est introduite dans le corps creux (100) dans la direction de l'axe de rotation (2) à travers une ouverture (102) du corps creux (100) de sorte qu'au moins la buse de mélange (80) est située à l'intérieur du corps creux (100), et
e. l'agent de conservation d'espace creux est évacué sous forme atomisée au moyen de la buse de mélange (80) et est déposé sur le côté intérieur du corps creux (100), l'unité formant buse de mélange (60) étant mise en rotation sur l'axe de rotation (2) par rapport au corps creux (100) pendant l'évacuation ou entre plusieurs phases d'évacuation,
**caractérisé par** au moins l'une des caractéristiques supplémentaires suivantes :
f. pendant que l'unité formant buse de mélange (60) est en rotation, l'alimentation de la buse de mélange (80) en agent de conservation d'espace creux est modifiée de sorte que la quantité d'agent de conservation d'espace creux évacuée dans une plage angulaire de dimension constante soit inégale en fonction de la position de rotation et/ou
g. tandis que l'unité formant buse de mélange (60) est en rotation, l'alimentation en agent de conservation d'espace creux est interrompue par phases de sorte qu'aucun agent de conservation d'espace creux ne soit évacué dans une zone partielle de la circonférence, et/ou
h. l'unité formant buse de mélange (60) est mise en rotation à une vitesse de rotation variable de sorte que la quantité d'agent de conservation d'espace creux évacuée dans une plage angulaire de dimension constante varie en fonction de la position de rotation.

2. Procédé de conservation d'espace creux selon la revendication 1 présentant la caractéristique supplémentaire suivante :
a. l'apport de gaz provoque l'atomisation, ce qui conduit à la nébulisation de l'agent de conservation d'espace creux.
